# EUROPÄISCHE PATENTSCHRIFT

(11) **EP 2 753 512 B1**
(45) Veröffentlichungstag und Bekanntmachung des Hinweises auf die Patenterteilung: **24.04.2019**
(21) Anmeldenummer: 12756726.1
(22) Anmeldetag: 07.09.2012
(51) Int. Cl.: B60T 8/17

(54) **BREMSSTEUEREINRICHTUNG FÜR EINE BREMSANLAGE, BREMSANLAGE, SCHIENENFAHRZEUG SOWIE VERFAHREN ZUM BETREIBEN EINER BREMSANLAGE**
BRAKE CONTROL DEVICE FOR A BRAKE SYSTEM, BRAKE SYSTEM, RAIL VEHICLE AND METHOD FOR OPERATING A BRAKE SYSTEM
DISPOSITIF DE COMMANDE DE FREINAGE POUR SYSTÈME DE FREINAGE, SYSTÈME DE FREINAGE, VÉHICULE FERROVIAIRE ET PROCÉDÉ POUR FAIRE FONCTIONNER UN SYSTÈME DE FREINAGE

(30) Priorität: 09.09.2011 DE 102011113026
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: ELSTORPFF, Marc-Gregory, München 80638 (DE); RAU, Rainer, 82538 Geretsried (DE); HAUPT, Robert, 81379 München (DE)
(86) Internationale Anmeldenummer: PCT/EP2012/067571
(87) Internationale Veröffentlichungsnummer: WO 2013/034735

(56) Entgegenhaltungen:
- EP-A1- 0 391 047
- EP-A2- 1 288 095
- WO-A1-2009/013172
- DE-C1- 4 425 598
- US-A1- 2009 198 406

## Beschreibung

Die vorliegende Erfindung betrifft eine Bremssteuereinrichtung für eine Bremsanlage für ein Schienenfahrzeug, eine Bremsanlage für ein Schienenfahrzeug, ein Schienenfahrzeug mit einer Bremssteuereinrichtung und/oder einer Bremsanlage sowie ein Verfahren zum Betreiben einer Bremsanlage eines Schienenfahrzeugs.

Eine Bremssteuereinrichtung mit den Merkmalen des Oberbegriffs des unabhängigen Anspruchs 1 ist aus dem Dokument EP 0 391 047 A1 bekannt.

Eines der wichtigsten und sicherheitsrelevantesten Systeme eines Schienenfahrzeugs ist die Bremsanlage. Bei modernen Schienenfahrzeugen werden heutzutage häufig pneumatische Bremsen als Betriebsbremsen eingesetzt, die gegebenenfalls durch weitere Bremssysteme ergänzt werden. Bei einer pneumatischen Bremse wird ein Bremsdruck auf einen Krafterzeuger ausgeübt, etwa einen pneumatischen Zylinder, welcher daraufhin Reibelemente einer Reibbremseinrichtung in reibenden Kontakt bringen soll, um eine Bremsung hervorzurufen. Zur Überprüfung der Funktionsfähigkeit von derartigen Reibbremselementen wird in der Regel vor der Abfahrt eines Zuges ein Bremssignal erzeugt und vermittels Drucksensoren überprüft, ob ein dem Bremssignal entsprechender Bremsdruck erzeugt wird.

Das Dokument WO 2009/013172 A1 betrifft ein Verfahren zum statischen Überprüfen eines Bremssystems eines Fahrzeugs mit wenigstens einer Schienenbremse, wobei Stromsensoren bei Betätigung der Schienenbremse den dadurch hervorgerufenen Stromfluss unter Gewinnung von Bremsstromwerten erfassen und als Zustandsdaten an eine Bremsprobensteuerungseinheit übertragen, wobei jeder Schienenbremse wenigstens ein Stromsensor zugeordnet ist oder mehrere Schienenbremsen durch zeitversetztes Ansteuern mittels einer Gesamtstromerfassung geprüft werden.

Eine Aufgabe der vorliegenden Erfindung besteht darin, eine verbesserte Überwachung von Bremsvorrichtungen von Schienenfahrzeugen zu ermöglichen.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug einen oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Ein Schienenfahrzeug oder ein Wagen des Schienenfahrzeugs kann Drehgestelle aufweisen, an denen Radachsen des Fahrzeugs angeordnet sind. Die Drehgestelle können an einem Wagenaufbau befestigt sein. Eine Bremsanlage kann eine pneumatische, elektropneumatische, hydraulische, elektrohydraulische, elektrische oder elektromechanische Bremsanlage sein und insbesondere eine oder mehrere entsprechende Bremsvorrichtungen aufweisen. Eine Bremsvorrichtung kann insbesondere eine kraftschlussabhängige Reibungsbremsvorrichtung sein, die es vermag, eine Bremskraft über einen Rad-Schiene-Kontakt zu übertragen. Eine derartige kraftschlussabhängige Reibungsbremsvorrichtung kann beispielsweise eine Klotzbremsvorrichtung, eine Scheibenbremsvorrichtung oder eine kombinierte Scheiben- und Klotzbremsvorrichtung sein. Eine Schienenbremsvorrichtung wie etwa eine Magnetschienenbremse gilt nicht als kraftschlussabhängige Reibungsbremsvorrichtung in diesem Sinne, da sie ihre Bremskraft statt über einen Rad-Schiene-Kontakt über einen eigenen Reibkontakt mit der Schiene zu übertragen vermag. Eine kraftschlussabhängige Reibungsbremsvorrichtung kann eine oder mehrere Reibbremseinrichtungen aufweisen. Eine kraftschlussabhängige Reibungsbremsvorrichtung kann einen oder mehrere Krafterzeuger aufweisen. Ein Krafterzeuger kann dazu ausgebildet sein, bei Beaufschlagung mit einem Betätigungsmedium wie einem Bremsdruck oder einem elektrischen Bremsstrom eine Reibbremseinrichtung für eine Bremsung zu betätigen. Eine Reibungsbremsvorrichtung mit einem Krafterzeuger, der durch einen Bremsdruck betätigt wird, kann als druckbetätigte Bremsvorrichtung bezeichnet werden. Eine druckbetätigte Bremsvorrichtung kann insbesondere eine pneumatische oder hydraulische Bremsvorrichtung sein. Eine Reibungsbremsvorrichtung mit einem Krafterzeuger, der durch einen elektrischen Strom betätigt wird, kann als eine elektrische betätigte Bremsvorrichtung angesehen werden und insbesondere eine elektrische oder elektromechanische Bremsvorrichtung sein. Eine druckbetätigte Bremsvorrichtung kann elektrisch ansteuerbare Ventile wie Magnetventile und/oder elektrisch ansteuerbare Vorsteuerventile aufweisen und entsprechend als elektropneumatische oder elektrohydraulische Bremsvorrichtung bezeichnet werden. Eine Reibbremseinrichtung kann dazu ausgebildet sein, bei Anlegen eines Betätigungsmediums wie einem hydraulischen oder pneumatischen Bremsdruck oder einem Bremsstrom auf einen oder mehrere Krafterzeuger ein auf ein Rad und/oder eine Achse des Fahrzeugs wirkendes Bremsmoment zu erzeugen. Eine druckbetätigte Bremsvorrichtung oder eine Reibbremseinrichtung kann als Krafterzeuger beispielsweise einen pneumatischen oder hydraulischen Zylinder aufweisen, der bei Beaufschlagung mit einem pneumatischen oder hydraulischen Druck die Reibbremseinrichtung für eine Bremsung betätigt. Eine elektrisch betätigte Bremsvorrichtung oder Reibbremseinrichtung kann als Krafterzeuger einen elektrisch betätigten Aktuator aufweisen, der es vermag, einen elektrischen Strom in eine Bremsbetätigung umzusetzen. Eine Reibbremseinrichtung kann insbesondere mehrere Reibelemente aufweisen, die dazu vorgesehen sind, aneinander zu reiben. Insbesondere kann mindestens ein Reibpaar mit zwei Reibelementen vorgesehen sein. Beispielsweise kann eine Reibbremseinrichtung eine Bremsscheibe aufweisen, die dazu ausgebildet ist, bei betätigter Bremse in reibenden Kontakt mit einem oder mehreren mit einem Bremsbelag versehenen Bremsbacken gebracht zu werden. Eine Reibbremseinrichtung kann alternativ einen oder mehrere Bremsklötze mit zugeordnetem Bremsbelag aufweisen, die bei betätigter Bremse in reibenden Kontakt mit einer Radfläche eines Rades gebracht werden. Der auf den Krafterzeuger oder den pneumatischen oder hydraulischen Zylinder zum Betätigen der Reibbremseinrichtung ausgeübte Druck kann als Bremsdruck bezeichnet werden. Ein zur Betätigung eines Krafterzeugers bereitgestellter elektrischer Strom kann als Bremsstrom bezeichnet werden. Eine Reibbremseinrichtung kann dazu ausgebildet sein, ein einzeln aufgehängtes Rad und/oder eine Radachse zu bremsen, die mindestens zwei starr miteinander verbundene Räder aufweist. Somit kann eine Reibbremseinrichtung mindestens einem Rad zugeordnet sein. Eine Reibbremseinrichtung kann dabei auf demjenigen Drehgestell angeordnet oder aufgehängt sein, an dem die ihm zugeordnete Achse und/oder das ihm zugeordnete Rad angeordnet ist. Die beim Betätigen einer Reibbremseinrichtung durch den Krafterzeuger ausgeübte Kraft kann als Bremskraft bezeichnet werden. Die Bremskraft hängt von dem ausgeübten Bremsdruck oder Bremsstrom sowie von Konstruktion, Zustand und Funktionsweise der Reibbremseinrichtung ab. Als Bremsmoment kann das Moment bezeichnet werden, das beim Bremsen auf ein Rad ausgeübt wird. Das Bremsmoment hängt insbesondere von der Bremskraft und von der Radgeometrie ab, insbesondere von einem Raddurchmesser. Bremskraft kann auch bei einem nicht bewegten Rad wirken, um beispielsweise einen Bremsbelag in einen Kontakt mit einer Radlauffläche oder einer Bremsscheibe zu bringen. Bei bewegtem Rad erzeugt eine Bremskraft ein zugeordnetes Bremsmoment. Eine Bremssteuereinrichtung kann eine elektronische Steuereinrichtung für eine Bremsanlage eines Schienenfahrzeugs sein. Die Bremssteuereinrichtung kann beispielsweise ein Gleitschutzrechner, ein Bremsrechner oder eine als andere Steuereinrichtung der Bremsanlage eines Schienenfahrzeugs ausgebildete Steuereinrichtung sein. Eine Bremswirkungssensoreinrichtung kann dazu ausgebildet sein, eine tatsächliche Bremswirkung zu erfassen, die auf ein Rad und/oder eine Achse ausgeübt wird. Es ist insbesondere vorstellbar, dass eine Bremswirkungssensoreinrichtung als eine Bremskraftsensoreinrichtung ausgebildet ist, welche eine auf mindestens eine ihr zugeordnete Reibbremseinrichtung ausgeübte Bremskraft und/oder ein zugeordnetes Bremsmoment zu erfassen vermag. Somit kann eine Bremswirkungssensoreinrichtung beispielsweise zur Erfassung einer durch mindestens eine Reibbremseinrichtung ausgeübten Bremskraft und/oder eines durch die mindestens eine Reibbremseinrichtung ausgeübten Bremsmomentes ausgebildet sein. Dazu kann eine Bremswirkungssensoreinrichtung beispielsweise einen oder mehrere Sensoren umfassen, die etwa an einem Aufhängungspunkt einer Reibbremseinrichtung an einem Drehgestell angeordnet sein können. Eine Bremswirkungssensoreinrichtung kann insbesondere einen oder mehrere Dehnungsstreifen aufweisen. Elemente, beispielsweise Sensoren, der Bremswirkungssensoreinrichtung können an beweglichen und/oder starren Elementen der Reibbremseinrichtung und/oder deren Aufhängung angeordnet sein, um bei einer Betätigung der Reibbremseinrichtung eine Rückwirkung zu messen, die durch einen Reibpartner wie einem Rad oder einer Bremsscheibe erzeugt wird. Durch eine derartige Rückwirkung kann auf die Bremskraft und/oder das Bremsmoment geschlossen werden. Eine solche Rückwirkung kann sich in Form einer Verformung bemerkbar machen, die beispielsweise durch Dehnungsstreifen erfassbar ist. Die Bremswirkungssensoreinrichtung kann zur Erfassung der Bremskraft und/oder des Bremsmomentes für mehr als eine Reibbremseinrichtung vorgesehen sein. Allgemein kann eine Sensoreinrichtung Signale bereitstellen, die Messergebnisse repräsentieren. Derartige Signale können durch entsprechende Daten dargestellt sein, die von einer Steuereinrichtung empfangen werden können. Eine Bremsbetätigungssensoreinrichtung kann dazu ausgebildet sein, eine die Betätigung einer Reibungsbremsvorrichtung betreffende und/oder repräsentierende Größe zu erfassen, die insbesondere ein Bremsdruck einer druckbetätigten Bremsvorrichtung und/oder ein Bremsstrom einer elektrisch betätigten Bremsvorrichtung sein kann.

Die vorliegende Erfindung betrifft eine Bremssteuereinrichtung für eine Bremsanlage für ein Schienenfahrzeug, wobei die Bremsanlage mindestens eine kraftschlussabhängige Reibungsbremsvorrichtung umfasst. Die Bremssteuereinrichtung ist dazu ausgebildet, von einer Bremsbetätigungssensoreinrichtung der Bremsanlage Bremsbetätigungsdaten zu empfangen, welche der mindestens einen kraftschlussabhängigen Reibungsbremsvorrichtung zugeordnet sind. Ferner ist die Bremssteuereinrichtung dazu ausgebildet, von einer Bremswirkungssensoreinrichtung der Bremsanlage Bremswirkungsdaten zu empfangen, welche der mindestens einen kraftschlussabhängigen Reibungsbremsvorrichtung zugeordnet sind. Darüber hinaus ist die Bremssteuereinrichtung dazu ausgebildet, die kraftschlussabhängige Reibungsbremsvorrichtung zu einer Bremsung anzusteuern und bei einer Bremsung Bremsbetätigungsdaten und Bremswirkungsdaten einander zuzuordnen und zu überwachen. Dadurch können während einer Bremsung Bremsbetätigungsdaten und Bremswirkungsdaten überwacht werden, um die Funktion der kraftschlussabhängigen Reibungsbremsvorrichtung auch während einer Bremsung zu überprüfen. Die Bremssteuereinrichtung kann insbesondere dazu ausgebildet sein, eine Bremsung während einer Fahrt anzusteuern, also wenn sich das Schienenfahrzeug bewegt. Die Bremssteuereinrichtung kann eine oder mehrere separate Steuereinrichtungskomponenten aufweisen. Beispielsweise kann eine Komponente zur Ansteuerung der Bremsung ausgebildet sein, und eine weitere Komponente zum Empfangen und/oder einander Zuordnen von Bremsbetätigungsdaten und Bremswirkungsdaten. Die kraftschlussabhängige Reibungsbremsvorrichtung kann eine druckbetätigte oder eine elektrisch betätigte Bremsvorrichtung sein. Eine druckbetätigte Bremsvorrichtung kann eine oder mehrere Steuerventilanordnungen aufweisen, über die ein Bremsdruck bereitgestellt werden kann. Es kann vorgesehen sein, dass eine druckbetätigte Bremsvorrichtung eine Hauptsteuerventileinrichtung aufweist, über welche mehreren Reibbremseinrichtungen der Bremsvorrichtung ein gemeinsamer Bremsdruck bereitgestellt werden kann, etwa ein Hauptbremsdruck. Dabei kann die Bremssteuereinrichtung und/oder eine Komponente der Bremssteuereinrichtung zum Ansteuern der Steuerventileinrichtung oder Steuerventileinrichtungen der druckbetätigten Bremsvorrichtung ausgebildet sein, um die druckbetätigte Bremsvorrichtung zu einer Bremsung anzusteuern. Eine kraftschlussabhängige Reibungsbremsvorrichtung kann eine oder mehrere Reibbremseinrichtungen aufweisen. Es kann vorgesehen sein, dass bei einer druckbetätigten Bremsvorrichtung neben einer Hauptsteuerventileinrichtung zusätzliche Steuerventileinrichtungen, etwa mit Ablassventilen vorgesehen sind, über welche die Reibbremseinrichtungen der druckbetätigten Bremsvorrichtung oder ihnen zugeordnete Krafterzeuger jeweils mit einem Bremsdruck versorgbar sind. Insbesondere kann vorgesehen sein, dass derartigen zusätzlichen Steuerventileinrichtungen ein gemeinsamer Bremsdruck zugeführt werden kann. Die zusätzlichen Steuerventile können Teil einer Gleitschutzeinrichtung sein. Durch eine geeignete Ansteuerung der zusätzlichen Steuerventileinrichtungen durch die Bremssteuereinrichtung kann der gemeinsame Bremsdruck jeweils auf einen individuellen Bremsdruck modifiziert werden, der zum Betätigen einer oder mehrerer Reibbremseinrichtungen wirken kann. Ein derartiger Bremsdruck kann individuell verschieden sein und sich insbesondere von einem bereitgestellten Hauptbremsdruck unterscheiden. Einer zusätzlichen Steuerventileinrichtung können jeweils ein oder mehrere Reibbremseinrichtungen zugeordnet sein, welche über die Steuerventileinrichtung mit Bremsdruck versorgbar sind. Eine elektrisch betätigte Bremsvorrichtung kann eine oder mehrere Stromquellen umfassen, über die nach Maßgabe der Bremssteuereinrichtung einem oder mehreren Krafterzeugern ein elektrischer Bremsstrom bereitgestellt werden kann. Es kann vorgesehen sein, dass unterschiedliche Krafterzeuger nach Maßgabe der Bremssteuereinrichtung mit unterschiedlichen Bremsströmen versorgbar sind und/oder versorgt werden. Die Bremsbetätigungssensoreinrichtung kann über einen oder mehrere Sensoren verfügen. Es kann vorgesehen sein, dass die Bremsbetätigungssensoreinrichtung einen oder mehrere Bremsdrucksensoren aufweist und somit als Bremsdrucksensoreinrichtung anzusehen ist. Entsprechend können Bremsbetätigungsdaten einen Bremsdruck repräsentieren und/oder Bremsdruckdaten sein. Die Bremsbetätigungssensoreinrichtung kann einen oder mehrere Sensoren zur Bestimmung eines elektrischen Bremsstroms aufweisen und somit als Bremsstromsensoreinrichtung angesehen werden. Entsprechend können Bremsbetätigungsdaten einen elektrischen Bremsstrom repräsentieren und/oder Bremsstromdaten sein. Allgemein können Bremsbetätigungsdaten Bremsdruckdaten und/oder Bremsstromdaten umfassen. Es kann zweckmäßig sein, dass die Bremsbetätigungssensoreinrichtung zur Übertragung von Bremsbetätigungsdaten mit der Bremssteuereinrichtung verbunden oder verbindbar ist. Die Bremsbetätigungssensoreinrichtung kann einzelnen Krafterzeugern und/oder Steuerventileinrichtungen der kraftschlussabhängigen Reibungsbremsvorrichtung zugeordnete Bremsdrucksensoren und/oder Bremsstromsensoren aufweisen. Die Bremsbetätigungssensoreinrichtung kann dazu ausgebildet sein, mindestens einen einem Krafterzeuger zur Betätigung der dem Krafterzeuger zugeordneten Bremseinrichtung zugeführten Bremsdruck oder Bremsstrom zu erfassen. Es kann insbesondere vorgesehen sein, dass eine als Bremsdrucksensoreinrichtung ausgebildete Bremsbetätigungssensoreinrichtung zum Erfassen eines Hauptbremsdrucks und/oder mindestens eines individuell bei einem Krafterzeuger und/oder stromabwärts einer Steuerventileinrichtung anliegenden Bremsdrucks ausgebildet ist. Bremsdruckdaten können somit einen Hauptbremsdruck und/oder mindestens einen bei einem Krafterzeuger und/oder stromabwärts einer Steuerventileinrichtung anliegenden Bremsdruck betreffen oder angeben. Insbesondere können derartige Bremsdruckdaten als der kraftschlussabhängigen Reibungsbremsvorrichtung zugeordnete Bremsdruckdaten angesehen werden. Es kann vorgesehen sein, dass eine als Bremsstromsensoreinrichtung ausgebildete Bremsbetätigungssensoreinrichtung zum Erfassen eines Hauptbremsstroms und/oder mindestens eines individuell bei einem Krafterzeuger anliegenden Bremsstroms ausgebildet ist. Bremsstromdaten können somit einen Hauptbremsstrom und/oder mindestens einen bei einem Krafterzeuger anliegenden Bremsstrom betreffen oder angeben. Insbesondere können derartige Bremsstromdaten als der kraftschlussabhängigen Reibungsbremsvorrichtung zugeordnete Bremsstromdaten angesehen werden. Bremsstromdaten und/oder Bremsdruckdaten können als Betätigungsdaten angesehen werden. Die Bremswirkungssensoreinrichtung kann einen oder mehrere Bremswirkungssensoren umfassen. Bremswirkungsdaten können eine bei einer Bremsung auf ein Rad ausgeübte Bremswirkung angeben oder betreffen. Ein Bremswirkungssensor kann insbesondere ein Bremskraftsensor sein, welcher eine Bremskraft und/oder ein Bremsmoment zu erfassen vermag. Somit können Bremswirkungsdaten Bremskraftdaten sein, welche eine durch mindestens eine Reibbremseinrichtung ausgeübte Bremskraft und/oder ein Bremsmoment angeben und/oder betreffen. Ein Bremswirkungssensor oder die Bremswirkungssensoreinrichtung kann mindestens einer Reibbremseinrichtung der Bremsvorrichtung zugeordnet sein. Bremswirkungsdaten von einer solchen einer Reibbremseinrichtung zugeordneten Sensoreinrichtung und/oder von einem solchen Sensor können als der pneumatischen Bremsvorrichtung zugeordnete Bremswirkungsdaten angesehen werden. Ein Bremswirkungssensor kann in direktem mechanischem Kontakt mit einer Komponente einer Reibbremseinrichtung und/oder mit einer Aufhängung der Reibbremseinrichtung angeordnet sein. Insbesondere kann ein Bremswirkungssensor zur Messung einer Materialverformung ausgebildet sein, aus welcher auf eine Bremswirkung geschlossen werden kann. Es kann zweckmäßig sein, wenn die Bremswirkungssensoreinrichtung zur Übertragung von Bremswirkungssensordaten mit der Bremssteuereinrichtung verbunden oder verbindbar ist. Es kann insbesondere vorgesehen sein, dass ein Bremswirkungssensor die durch eine Reibbremseinrichtung auf ein Rad oder eine Achse aufgebrachte Bremskraft zu erfassen vermag. Das Ansteuern der kraftschlussabhängigen Reibungsbremsvorrichtung durch die Bremssteuereinrichtung kann beispielsweise dadurch gewährleistet werden, dass die Bremssteuereinrichtung es vermag, Steuerventileinrichtungen der kraftschlussabhängigen Reibungsbremsvorrichtung elektrisch anzusteuern und/oder eine Stromversorgung zur Bereitstellung eines oder mehrerer elektrischer Bremsströme anzusteuern. Dabei kann mindestens ein bestimmter Bremsdruck oder Bremsstrom bereitgestellt werden. Bei einer Bremsung, die durch die Bremssteuereinrichtung angesteuert sein kann, empfängt die Bremssteuereinrichtung Bremsbetätigungsdaten wie Bremsdruckdaten und/oder Bremsstromdaten sowie Bremswirkungsdaten. Diese kann sie derart einander zuordnen, dass beispielweise jeweils einer kraftschlussabhängigen Reibungsbremsvorrichtung oder einer bestimmten Reibbremseinrichtung der kraftschlussabhängigen Reibungsbremsvorrichtung zugeordnete Bremswirkungsdaten und dieser kraftschlussabhängigen Reibungsbremsvorrichtung oder Reibbremseinrichtung zugeordnete Bremsbetätigungsdaten einander zugeordnet werden. Die Bremssteuereinrichtung kann dazu ausgebildet sein, Bremsbetätigungsdaten und Bremswirkungsdaten miteinander zu korrelieren. Insbesondere kann eine zeitliche Korrelierung und/oder Synchronisierung der Bremsbetätigungsdaten und Bremswirkungsdaten durch die Bremssteuereinrichtung vorgesehen sein. Die Bremssteuereinrichtung kann dazu ausgebildet sein, einen zeitlichen Zusammenhang zwischen Bremsbetätigungsdaten und Bremswirkungsdaten und/oder ein zeitliche Veränderung eines Zusammenhangs zwischen Bremsbetätigungsdaten und Bremswirkungsdaten zu bestimmen. Ein Zusammenhang zwischen Bremsbetätigungsdaten und Bremswirkungsdaten kann ein funktionaler Zusammenhang sein und beispielsweise durch ein Verhältnis zwischen zueinander korrelierten Bremsbetätigungsdaten und Bremswirkungsdaten gegeben sein. Ein Überwachen der Bremsbetätigungsdaten und der Bremswirkungsdaten kann das Überprüfen umfassen, ob ein vorbestimmter Zusammenhang zwischen Bremsbetätigungsdaten und Bremswirkungsdaten erfüllt oder nicht erfüllt ist. So kann beispielsweise überwacht werden, ob bei einer bestimmten angesteuerten und/oder durch die Bremsbetätigungssensoreinrichtung erfassten Betätigung, insbesondere einem bei einem bestimmten angesteuerten und/oder erfassten Bremsdruck oder Bremsstrom, eine bestimmte Bremswirkung erreicht wird. Es ist vorstellbar, dass die Bremssteuereinrichtung dazu ausgebildet ist, Bremskraftdaten zu bearbeiten, um die Bremskraft zu ermitteln, die von einer Reibbremseinrichtung ausgeübt wird. Dabei ist zu berücksichtigen, dass gegebenenfalls bei einem bewegten zu bremsenden Rad eine Rückwirkung des sich drehenden Rades durch einen Bremskraftsensor registriert wird. Insbesondere kann die Bremssteuereinrichtung dazu ausgebildet sein, aus Bremskraftdaten die Bremskraft und ein eventuell auftretendes Bremsmoment zu berechnen. Dabei kann die Bremssteuereinrichtung dazu ausgebildet sein, auf gespeicherte Modellparameter zuzugreifen, welche die mindestens eine Reibbremseinrichtung beschreiben. Es ist allerdings auch vorstellbar, dass die Bremskraftsensoreinrichtung mit einer Rechnereinheit versehen ist, welche Bremskraftdaten zu bearbeiten vermag. Bei einer derartigen Bearbeitung kann vorgesehen sein, dass die Rechnereinheit oder die Steuereinrichtung Bremskraft und Bremsmoment berechnet, in Form von entsprechend identifizierten und formatierten Bremskraftdaten bereitstellt und gegebenenfalls an die Bremssteuereinrichtung übermittelt. Dabei kann eine Rechnereinheit als Teil der Bremssteuereinrichtung angesehen werden oder der Sensoreinrichtung zugeordnet sein. Die Bremssteuereinrichtung kann dazu ausgebildet sein, als Teil des Überwachens der Bremsbetätigungsdaten und Bremswirkungsdaten eine Funktionsdiagnose durchzuführen.

Die Bremsung kann eine Prüfbremsung sein. Für eine Prüfbremsung kann die Bremssteuereinrichtung die kraftschlussabhängige Reibungsbremsvorrichtung mit einem vorbestimmten Bremsdruck oder Bremsstrom und/oder einer vorbestimmten Bremswirkung ansteuern, insbesondere mit einer vorbestimmten Bremskraft. Dabei können sich der vorbestimmte Bremsdruck oder Bremsstrom und/oder die vorbestimmte Bremswirkung auf eine oder mehrere Reibbremseinrichtungen beziehen. Eine Prüfbremsung soll dabei primär nicht der Abbremsung des Schienenfahrzeugs dienen, sondern der Überwachung und Überprüfung der kraftschlussabhängigen Reibungsbremsvorrichtung. Bei der Prüfbremsung kann ein geringer Bremsdruck oder Bremsstrom angelegt und/oder eine geringe Bremswirkung angesteuert werden. Insbesondere kann vorgesehen sein, dass Bremsdruck oder Bremsstrom und/oder Bremskraft geringer sind als im Fall einer Schnellbremsung oder Notbremsung. Eine Prüfbremsung kann insbesondere durchgeführt werden, während das Fahrzeug für eine Fahrt angetrieben wird.

Besonders zweckmäßig kann die Bremssteuereinrichtung dazu ausgebildet sein, eine Prüfbremsung während einer Fahrt des Fahrzeugs anzusteuern, also wenn sich das Schienenfahrzeug bewegt. Dies ermöglicht es beispielsweise, zu überprüfen, ob bei Anlegen eines Bremsdrucks oder Bremsstroms lediglich eine Bremskraft für eine Reibbremseinrichtung erzeugt wird, oder ob auch ein Bremsmoment entsteht. Denn ein solches Bremsmoment würde das Signal einer Bremskraftsensoreinrichtung gegenüber dem Fall, in dem lediglich eine Bremskraft anliegt, erheblich verändern. Liegt während einer Fahrt beim angesteuerten Bremsdruck oder Bremsstrom lediglich eine Bremskraft, aber kein Bremsmoment an, kann beispielsweise davon ausgegangen werden, dass das zugeordnete Rad blockiert und sich nicht oder nicht wie erwünscht dreht.

Die kraftschlussabhängige Reibungsbremsvorrichtung weist mehrere separat voneinander durch die Bremssteuereinrichtung ansteuerbare Reibbremseinrichtungen auf. Somit ergibt sich eine flexible Ansteuerung der Bremsen. Eine separate Ansteuerung kann bedeuten, Steuerventileinrichtungen oder Stromversorgungen derart anzusteuern, dass Krafterzeugern unterschiedliche Bremsdrücke oder Bremsströme zugeführt werden und/oder dass verschiedene Reibbremseinrichtungen mit unterschiedlichen Bremsdrücken oder Bremsströmen betätigt werden.

Die Bremssteuereinrichtung ist dazu ausgebildet, für eine Prüfbremsung die mehreren Reibbremseinrichtungen zeitlich verzögert anzusteuern. Eine Prüfbremsung kann also mehrere zeitlich auseinanderliegende Bremsungen umfassen. Somit kann vermieden werden, dass das Fahrzeug während einer Fahrt durch Prüfbremsungen übermäßig abgebremst wird. Darüber hinaus ergibt sich ein geringer Druckluftverbrauch oder Stromverbrauch für eine einzelne Bremsung. Insbesondere können die Reibbremseinrichtungen in einer vorbestimmten Sequenz angesteuert werden. In diesem Zusammenhang kann vorgesehen sein, dass das Schienenfahrzeug, insbesondere ein Wagen des Schienenfahrzeugs, mindestens zwei Drehgestelle aufweist. An jedem Drehgestell können mindestens zwei Radachsen vorgesehen sein. Jeder Radachse eines Drehgestells kann mindestens eine Reibbremseinrichtung zugeordnet sein, wobei unterschiedlichen Radachsen eines Drehgestells unterschiedliche Reibbremseinrichtungen zugeordnet sein können. Somit können an einem Drehgestell mehrere Reibbremseinrichtungen vorgesehen sein. Die Reibbremseinrichtungen auf den unterschiedlichen Drehgestellen können von einer gemeinsamen Hauptsteuerventileinrichtung oder Stromversorgung mit einem gemeinsamen Bremsdruck oder Bremsstrom versorgbar sein, der individuell modifizierbar sein kann, beispielsweise durch jeweils einer Reibbremseinrichtung zugeordnete zusätzliche Steuerventileinrichtungen. Die Bremsteuereinrichtung kann dazu ausgebildet sein, die kraftschlussabhängige Reibungsbremsvorrichtung zur Betätigung der Reibbremseinrichtungen der Drehgestelle in einer vorbestimmten Sequenz anzusteuern. Dabei kann vorgesehen sein, dass die Reibbremseinrichtungen drehgestellweise angesteuert werden. Beispielsweise können zuerst die an einem ersten Drehgestell angeordneten Reibbremseinrichtungen und dann die an einem zweiten Drehgestell angeordneten Reibbremseinrichtungen für eine Bremsung angesteuert werden. Die Reibbremseinrichtungen an dem jeweiligen Drehgestell können dabei gleichzeitig oder zeitlich verzögert, also in einer Untersequenz, angesteuert werden. Alternativ ist beispielsweise vorstellbar, dass bei einer Sequenz in einem ersten Durchlauf zuerst eine erste Reibbremseinrichtung eines ersten Drehgestells zu einer Bremsung angesteuert wird, und nachfolgend eine erste Reibbremseinrichtung eines zweiten Drehgestells. Sind weitere Drehgestelle vorhanden, deren Reibbremseinrichtungen über die gleiche Hauptsteuerventileinrichtung mit Bremsdruck oder über eine Stromversorgung mit Bremsstrom versorgt werden können, können nacheinander jeweils erste Reibbremseinrichtungen der weiteren Drehgestelle zu einer Bremsung angesteuert werden. Sind alle ersten Reibbremseinrichtungen der Drehgestelle angesteuert, kann in einem zweiten Durchlauf durch die Bremssteuereinrichtung eine zweite Reibbremseinrichtung eines der Drehgestelle, insbesondere des ersten Drehgestells, zu einer Bremsung angesteuert werden. Danach kann in der Sequenz jeweils eine zweite Reibbremseinrichtung eines der weiteren Drehgestelle zu einer Bremsung angesteuert werden. Im zweiten Durchlauf können die Drehgestelle in der gleichen Reihenfolge durchlaufen werden wie beim ersten Durchlauf. Es ist auch vorstellbar, dass im zweiten Durchlauf die Reihenfolge der Drehgestelle anders ist als im ersten Durchlauf. Es können je nach Anzahl der Reibbremseinrichtungen pro Drehgestell weitere Durchläufe mit geeigneter Reihenfolge der Drehgestelle vorgesehen sein. Die Bremssteuereinrichtung kann insbesondere dazu ausgebildet sein, in einer Sequenz jeweils eine Reibbremseinrichtung eines Drehgestells zu einer Bremsung anzusteuern, bevor sie nacheinander jeweils eine Reibbremseinrichtung eines anderen Drehgestells zu einer Bremsung ansteuert.

Die Bremssteuereinrichtung kann dazu ausgebildet sein, eine Prüfbremsung während der Fahrt in vorgegebenen Abständen anzusteuern. Die vorgegebenen Abstände können zeitliche Abstände sein. So kann etwa vorgesehen sein, dass die Bremssteuereinrichtung dazu eingerichtet ist, in vorgegebenen zeitlichen Intervallen eine Prüfbremsung anzusteuern. Es ist auch vorstellbar, dass die vorgegebenen Abstände räumliche Abstände sind, so dass beispielsweise nach Befahren einer bestimmten Strecke eine Prüfbremsung angesteuert wird. Eine derartig angesteuerte Prüfbremsung kann eine oder mehrere Reibbremseinrichtungen betreffen.

Bei einer Weiterbildung kann die Bremssteuereinrichtung dazu ausgebildet sein, Bremswirkungsdaten und zugeordnete Bremsbetätigungsdaten abzuspeichern. Dadurch können Datensätze für eine Langzeitüberwachung oder für eine spätere Analyse des Bremsverhaltens angelegt werden. Die Bremssteuereinrichtung kann in diesem Zusammenhang mit einer Speichereinrichtung verbunden oder verbindbar sein. Eine derartige Speichereinrichtung kann der Bremssteuereinrichtung zugerechnet sein. Insbesondere kann vorgesehen sein, dass die Bremssteuereinrichtung dazu ausgebildet ist, basierend auf abgespeicherten Bremswirkungsdaten und Bremsbetätigungsdaten einen zeitlichen Verlauf des Verhaltens von Reibbremseinrichtungen zu überwachen. Insbesondere ist es vorstellbar, dass die Bremssteuereinrichtung dazu ausgebildet ist, den zeitlichen Verlauf von Bremswirkungsdaten und ihnen zugeordneten Bremsbetätigungsdaten für einzelne Reibbremseinrichtungen zu überwachen. Beispielsweise kann der Verlauf des Zusammenhangs zwischen Bremskraft und Bremsdruck oder Bremsstrom für mindestens eine Reibbremseinrichtung überwacht werden. Dabei kann beispielsweise festgestellt werden, ob und/oder wie sich die von einer Reibbremseinrichtung erzeugte Bremskraft bei einem bestimmten Bremsdruck oder Bremsstrom im Verlauf der Zeit ändert.

Die Erfindung betrifft außerdem eine Bremsanlage für ein Schienenfahrzeug mit einer hierin beschriebenen Bremssteuereinrichtung. Die Bremssteuereinrichtung kann insbesondere eine hierin beschriebene Bremswirkungssensoreinrichtung und/oder eine hierin beschriebene Bremsbetätigungssensoreinrichtung und/oder mindestens eine hierin beschriebene kraftschlussabhängige Reibungsbremsvorrichtung aufweisen.

Ferner betrifft die Erfindung ein Schienenfahrzeug mit einer hierin beschriebenen Bremssteuereinrichtung und/oder einer hierin beschriebenen Bremsanlage.

Darüber hinaus betrifft die Erfindung ein Verfahren zum Betreiben einer Bremsanlage eines Schienenfahrzeugs mit den Schritten des Ansteuerns, durch eine Bremssteuereinrichtung, der Bremsanlage für eine Bremsung, des Empfangens, durch die Bremssteuereinrichtung von durch eine Bremsbetätigungssensoreinrichtung der Bremsanlage übermittelten Bremsbetätigungsdaten, des Empfangens, durch die Bremssteuereinrichtung, von durch eine Bremswirkungssensoreinrichtung der Bremsanlage übermittelten Bremswirkungsdaten, sowie des Zuordnens, durch die Bremssteuereinrichtung, von Bremsbetätigungsdaten zu entsprechenden Bremswirkungsdaten und des Überwachens, durch die Bremssteuereinrichtung, von einander zugeordneten Bremswirkungsdaten und Bremsbetätigungsdaten. Bei der Bremssteuereinrichtung kann es sich insbesondere um eine hierin beschriebene Bremssteuereinrichtung handeln. Die Bremsanlage kann eine hierin beschriebene Bremsanlage sein. Beim Ansteuern der Bremsanlage für eine Bremsung kann mindestens eine kraftschlussabhängige Reibungsbremsvorrichtung der Bremsanlage für die Bremsung angesteuert sein. Es ist vorstellbar, dass die Bremsung eine Prüfbremsung ist. Die Prüfbremsung kann während einer Fahrt angesteuert werden. Die kraftschlussabhängige Reibungsbremsvorrichtung kann mehrere separat voneinander durch die Bremssteuereinrichtung ansteuerbare Reibbremseinrichtungen aufweisen. Die Reibbremseinrichtungen können während der Bremsung, insbesondere während einer Prüfbremsung, separat voneinander angesteuert werden. Für eine Prüfbremsung können die mehreren Reibbremseinrichtungen zeitlich verzögert hintereinander angesteuert werden. Es kann vorgesehen sein, dass eine vorbestimmte Sequenz zur Ansteuerung der Reibbremseinrichtungen vorgesehen ist. Es kann vorgesehen sein, dass eine Prüfbremsung während der Fahrt in vorgegebenen Abständen angesteuert wird. Die vorgegebenen Abstände können beispielsweise zeitliche oder räumliche Abstände sein. Es kann das Speichern, durch die Bremssteuereinrichtung, von Bremswirkungsdaten und zugeordneten Bremsbetätigungsdaten vorgesehen sein. Die Daten können durch die Bremssteuereinrichtung abgerufen werden, um beispielsweise eine Funktionsdiagnose, eine Überwachung einer zeitlichen Entwicklung und/oder eine Fehlerdiagnose durchzuführen.

Eine Funktionsdiagnose kann allgemein verschiedene Ergebnisse liefern. Beispielsweise kann die Bremssteuereinrichtung als Ergebnis der Funktionsdiagnose bei bewegtem Fahrzeug eine blockierte Achse daran erkennen, dass ein Bremsmoment für die blockierte Achse oder das blockierte Rad aus den Bremswirkungsdaten hervorgeht, ohne dass ein Bremsdruck oder Bremsstrom vorliegt und/oder eine Bremsung angesteuert ist. Dabei kann beispielsweise verglichen werden, ob an den anderen Achsen und/oder Rädern des Fahrzeugs eine nennenswerte Bremskraft und/oder ein Bremsmoment anliegt, das auf einen Bremsdruck oder Bremsstrom zurückgeführt werden kann. Liegt beispielsweise an den anderen Rädern ein Bremsdruck oder Bremsstrom an und/oder eine entsprechende Ansteuerung wurde durchgeführt, und auf diese Weise ist eine Bremskraft und/oder ein Bremsmoment wirksam, so ist es wahrscheinlich, dass das fragliche Rad ebenfalls korrekt gebremst wird, aber bei der Bremsdruckerfassung oder Bremsstromerfassung ein Fehler vorliegt. Für einen solchen Fall kann ein Vergleich mit einer elektronischen oder digitalen Ansteuerung dabei helfen, zu entscheiden, ob ein blockiertes Rad oder eine fehlerhafte Bremsbetätigungssensoreinrichtung vorliegt. Denn es ist unwahrscheinlich, dass ein fehlerhaftes Ansteuerungssignal und eine fehlerhafte Bremsdruckerfassung oder Bremsstromerfassung gleichzeitig auftauchen. Darüber hinaus kann im Rahmen der Funktionsdiagnose festgestellt werden, ob sich das Fahrzeug bewegt. Denn bei einer angelegten Bremskraft durch einen gezielt angesteuerten Bremsdruck oder Bremsstrom unterscheidet sich das Signal einer Bremswirkungssensoreinrichtung bei nicht bewegtem Fahrzeug von einem Signal, das bei Anliegen eines Bremsmomentes hervorgerufen wird, also während eines bewegten Zustandes. Denn bei nichtbewegtem Fahrzeug liegt zwar eine Bremskraft vor, aber es wird kein Bremsmoment erzeugt, da sich das Rad und/oder die Achse nicht dreht. Insbesondere bei der Überprüfung von mehreren Rädern oder Achsen kann daraus auf den Bewegungszustand des Fahrzeugs geschlossen werden. Auch bei blockierenden Rädern können sich die Signale der Bremswirkungssensoreinrichtung von den Signalen bei Zugstillstand unterscheiden. Liegt bei unbetätigter Bremse und bewegtem Fahrzeug, also dann, wenn kein Bremsdruck oder Bremsstrom an die mindestens eine Reibbremseinrichtung oder Reibbremseinrichtungen angelegt wird, ein Bremsmoment und/oder eine Bremskraft vor, kann davon ausgegangen werden, dass die Bremse blockiert. Wird bei bewegtem Fahrzeug ein Bremsdruck oder Bremsstrom angelegt, aber kein Bremsmoment erfasst, kann eine Fehlfunktion der Bremse vorliegen, bei der ein Bremsdruck oder Bremsstrom nicht in eine Bremskraft beziehungsweise ein Bremsmoment umgesetzt wird. Lässt sich aus Daten einer anderen Sensoreinrichtung, beispielsweise aus Raddrehzahldaten, auf eine blockierte Achse oder ein blockiertes Rad schließen, kann in diesem Fall davon ausgegangen werden, dass die Achse aus Gründen blockiert, die nicht im Bremssystem liegen. Beispielsweise kann ein Lagerfehler oder ein Antriebsfehler vorliegen. Über einen optional mit der Bremssteuereinrichtung verbundenen oder verbindbaren Temperatursensor am Lager kann daraufhin zwischen einem Lagerschaden und einem Antriebsschaden unterschieden werden. Beispielsweise kann durch einen derartigen Temperatursensor ein Heißlaufen des Lagers als ein Hinweis auf einen Lagerschaden dienen. Dann, wenn kein Heißlaufen erkannt wird, kann ein Antriebsschaden vorliegen. Basierend auf einer derartigen Differenzierung der Funktionsdiagnose kann der Zugbetrieb auf unterschiedliche Art durchgeführt werden. Beispielsweise kann bei dem Erkennen einer blockierten Bremse bei einem angehaltenen Zug eine einzelne Bremse in eine neutrale Stellung gebracht und von einer Druckversorgung getrennt werden. Der Zug kann dann unter Umständen bei langsamerer Fahrt durch entsprechende Ansteuerung der restlichen Reibbremseinrichtungen und anderer Bremssysteme gegebenenfalls die Fahrt fortsetzen. Bei einer Blockierung durch ein Lager oder Antrieb ist in der Regel eine Notbremsung und anschließendes Abschleppen des Fahrzeugs notwendig. Durch die beschriebene Funktionsdiagnose wird eine Rollüberwachung möglich, die separat von einem Gleitschutz ausgebildet sein kann. Insbesondere wird eine Überwachung der Rolleigenschaften von Achsen und/oder Rädern möglich, die unabhängig von Raddrehzahlsensoren durchgeführt werden kann. Selbst wenn Raddrehzahlsensoren Stützdaten für die beschriebene Funktionsdiagnose liefern, kann grundsätzlich ein blockiertes Rad und/oder eine blockierte Achse unabhängig von diesen Stützdaten erfolgen. Damit kann eine insbesondere für Hochgeschwindigkeitszüge vorgeschriebene separate Rollüberwachungseinrichtung entfallen, die zusätzlich zu einer normalen Bremssteuerung und einem Gleitschutz vorzusehen ist. Alternativ kann die Bremsanlage und/oder das Schienenfahrzeug allgemein eine Rollüberwachungseinrichtung aufweisen, die Drehzahlsensoren aufweisen kann oder mit Drehzahlsensoren verbunden sein kann. Es kann somit eine Plausibilisierung der Daten der Rollüberwachungseinrichtung vorgenommen werden. Dabei ist vorstellbar, dass eine Steuereinrichtung des Schienenfahrzeugs, insbesondere die Bremssteuereinrichtung, es vermag, eine Plausibilisierung von Daten einer Rollüberwachungseinrichtung durchzuführen. Es kann insbesondere vorgesehen sein, dass die Steuereinrichtung dazu ausgebildet ist, auf Bremswirkungsdaten basierende Daten mit Daten von der Rollüberwachungseinrichtung zu vergleichen. Auf Bremswirkungsdaten basierend Daten können dabei insbesondere ein Ergebnis einer Funktionsdiagnose repräsentieren. Darüber hinaus wirkt die beschriebene Prüfbremsung als eine dynamische Bremsprobe während der Fahrt. Für den Fall einer blockierten Achse oder einem blockierten Rad bei einem bewegten Fahrzeug ergeben sich im Wesentlichen Gleitreibungseffekte zwischen Rad und Schiene, da ein blockiertes Rad im Wesentlichen nicht rotiert. Dies kann dazu führen, dass periodische Signale, die in den Bremswirkungsdaten und/oder Bremsbetätigungsdaten bei einem rotierenden Rad oder einer rotierenden Achse auftauchen können, während einer Gleitreibungsphase, also bei blockiertem Rad oder blockierter Achse nicht erscheinen. Am Fehlen derartiger periodischer Signale kann beispielsweise eine Gleitreibung oder eine blockierte Achse beziehungsweise ein blockiertes Rad erkannt werden. Entsprechend kann die Bremssteuereinrichtung dazu ausgebildet sein, periodische und/oder quasi-periodische Signale in den Bremswirkungsdaten und/oder Bremsbetätigungsdaten zu erfassen und/oder zu identifizieren. Die Bremssteuereinrichtung kann dazu ausgebildet sein, erfasste periodische und/oder quasi-periodische Signale zu speichern oder auf derartigen Signalen basierende Daten zu speichern. Es kann vorgesehen sein, dass die Bremssteuereinrichtung es vermag, gespeicherte Daten mit aktuellen Bremswirkungsdaten und/oder Bremsbetätigungsdaten zu vergleichen. Basierend auf dem Vergleich kann beispielsweise das Wegfallen eines periodischen Signals bei einer Reibbremseinrichtung und/oder das Verschieben der Periode hin zu größeren Periodizitäten festgestellt werden. Dies kann ein Hinweis auf ein blockiertes oder gleitendes Rad sein. Dabei kann es zweckmäßig sein, dass die Bremssteuereinrichtung dazu ausgebildet ist, ein Signalspektrum im Frequenzbereich aus den Bremswirkungsdaten und/oder Bremsbetätigungsdaten zu ermitteln, beispielsweise durch eine geeignete Transformation wie eine Fourier-Transformation. Es kann auch zweckmäßig sein, die Daten geeignet zu normieren, etwa indem Raddrehzahldaten zur Normierung und/oder Filterung der Bremsdaten verwendet werden. Es kann eine Normalperiode für periodische Signale als Vergleichsbasis definiert werden, die von der derzeitigen Raddrehzahl unabhängig ist.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer Bremsanlage eines Schienenfahrzeugs mit einer Bremssteuereinrichtung; und
- Figur 2: schematisch ein Flussdiagramm eines Verfahrens zum Betreiben einer Bremsanlage eines Schienenfahrzeugs.

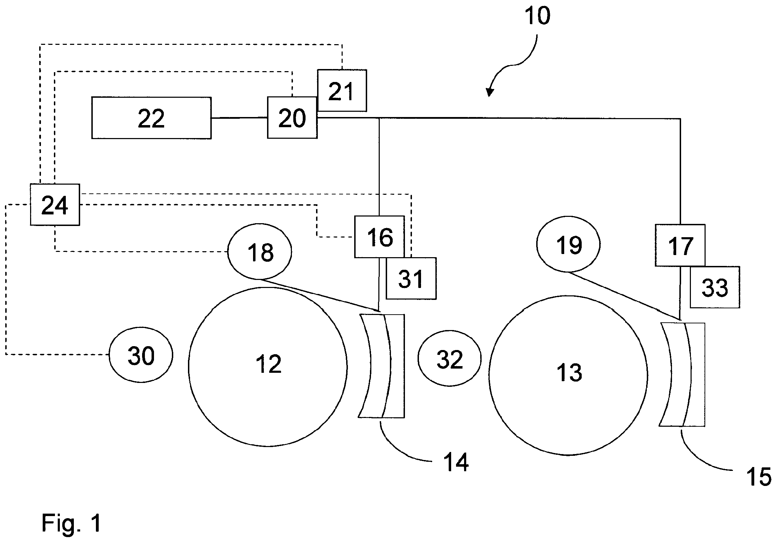

Figur 1 zeigt schematisch eine Bremsanlage 10 eines Schienenfahrzeugs mit einer kraftschlussabhängigen Reibungsbremsvorrichtung, die in diesem Beispiel als pneumatische Bremsvorrichtung ausgebildet ist. Mechanische und pneumatische Verbindungen und Leitungen sind mit durchgezogenen Linien dargestellt, während elektrische Verbindungen oder Kommunikationskanäle gestrichelt dargestellt sind. Die Bremsanlage 10 ist dazu vorgesehen, Räder 12 und 13 des Schienenfahrzeugs zu bremsen. In diesem Beispiel befinden sich die Räder 12 und 13 auf unterschiedlichen Radachsen. Dem ersten Rad 12 ist ein erster Bremsklotz 14 zugeordnet. Dem zweiten Rad 13 ist ein zweiter Bremsklotz 15 zugeordnet. Jeder der Bremsklötze 14, 15 weist einen Bremsbelag auf, der dann, wenn der Bremsklotz mit dem Bremsbelag an die Lauffläche des zugeordneten Rades 12, 13 gedrückt wird, das zugeordnete Rad abbremst. Der Bremsklotz 14 ist durch einen Krafterzeuger 16 zum Bremsen betätigbar. Der Krafterzeuger 16 ist über eine Versorgungsleitung mit einer Hauptsteuerventileinrichtung 20 verbunden. Über die Hauptsteuerventileinrichtung 20 kann dem Krafterzeuger 16 Druckluft zugeführt werden. Ähnlich ist dem Bremsklotz 15 ein Krafterzeuger 17 zugeordnet, der ebenfalls über die Hauptsteuerventileinrichtung 20 mit Druckluft zur Betätigung des Krafterzeugers versorgt werden kann, um den Bremsklotz 15 mit der Radlauffläche des Rades 13 in Kontakt zu bringen. Die Hauptsteuerventileinrichtung 20 ist mit einer Druckluftvorratseinrichtung 22 verbunden, aus der sie Druckluft entnehmen kann, um sie bei einer Bremsung den Krafterzeugern 16, 17 bereitzustellen. Ferner ist eine als Bremsrechner ausgebildete elektronische Bremssteuereinrichtung 24 vorgesehen, welche es vermag, die Hauptsteuerventileinrichtung 20 anzusteuern. Dazu kann die Hauptsteuerventileinrichtung 20 insbesondere eine oder mehrere Magnetventile aufweisen, die durch die Bremssteuereinrichtung 24 ansteuerbar sind. Aus Gründen der Übersicht sind die elektrischen Steuerleitungen für die dem zweiten Rad zugeordneten Komponenten nicht dargestellt. Sie sind allerdings mit den dem ersten Rad und seinen Komponenten zugeordneten Steuerleitungen vergleichbar. Dem ersten Rad 12 ist ferner ein Bremswirkungssensor 18 zugeordnet, der es vermag, eine bei einer Bremsung auf den Bremsklotz 14 ausgeübte Bremskraft und/oder ein Bremsmoment zu ermitteln. Der Bremswirkungssensor 18 kann somit als Bremskraftsensor angesehen werden. Ein derartiger Bremswirkungssensor kann beispielsweise einen oder mehrere Dehnungsstreifen aufweisen. Der Sensor 18 ist zur Übertragung von Daten an die elektronische Bremssteuereinrichtung 24 angeschlossen. Ferner ist dem Rad 12 ein erster Raddrehzahlsensor 30 zugeordnet, welcher die Drehzahl des Rades 12 zu erfassen vermag. Auch dieser Sensor ist zur Datenübertragung mit der elektronischen Steuereinrichtung 24 verbunden. Analog ist dem zweiten Rad ein zweiter Bremswirkungssensor 19 zugeordnet, welcher eine auf den Bremsklotz 15 ausgeübte Bremskraft und/oder ein Bremsmoment zu ermitteln vermag. Darüber hinaus ist dem zweiten Rad 13 auch ein zweiter Raddrehzahlsensor 32 zugeordnet. Die Sensoren 18, 19 können jeweils als Teil einer Bremswirkungssensoreinrichtung angesehen werden. Die Raddrehzahlsensoren 30, 32 können jeweils als Teil einer Raddrehzahlsensoreinrichtung angesehen werden. Die Krafterzeuger 16, 17 können jeweils pneumatische Zylinder umfassen, die bei Beaufschlagung mit einem Bremsdruck eine Bremskraft auf den zugeordneten Bremsklotz 14, 15 ausüben. Die Krafterzeuger 16, 17 können ferner jeweils eine durch die elektronische Steuereinrichtung 24 ansteuerbare Steuerventileinrichtung aufweisen, über die ein durch die Hauptsteuerventileinrichtung 20 bereitgestellter Hauptbremsdruck individuell für den jeweiligen pneumatischen Zylinder der Krafterzeuger 16, 17 eingestellt werden kann. Somit können insbesondere die Krafterzeuger 16, 17 nach Maßgabe der elektronischen Steuereinrichtung 24 unterschiedliche Bremsdrücke an die Bremsklötze 14, 15 anlegen und somit die Reibbremseinrichtungen asymmetrisch oder separat betätigen oder ansteuern. Der Hauptsteuerventileinrichtung 20 ist ein Hauptbremsdrucksensor 21 zugeordnet, der den durch die Hauptsteuerventileinrichtung 20 bereitgestellten Hauptbremsdruck zu erfassen vermag. Der Drucksensor 21 ist zur Datenübertragung mit der elektronischen Steuereinrichtung 24 verbunden. Ferner ist dem Krafterzeuger 16 ein erster Bremsdrucksensor 31 zugeordnet, und dem zweiten Krafterzeuger 17 ein zweiter Bremsdrucksensor 33. Der erste und der zweite Bremsdrucksensor 31, 33 sind jeweils dazu ausgebildet, dem individuell zum Erzeugen einer Bremskraft durch den zugeordneten Krafterzeuger 16, 17 bereitgestellten Bremsdruck zu erfassen. Die Sensoren 31, 33 sowie der Hauptbremsdrucksensor 21 können als Teil einer Bremsdrucksensoreinrichtung angesehen werden. Die Bremsdrucksensoren 21, 31, 33 sind ebenfalls zur Datenübertragung mit der elektronischen Bremssteuereinrichtung 24 verbunden. Somit kann die elektronische Bremssteuereinrichtung 24 einerseits den eingeleiteten Hauptbremsdruck hinter der Hauptsteuerventileinrichtung 20 erfassen. Andererseits empfängt die Bremssteuereinrichtung 24 jeweils den individuell zur Erzeugung von Bremskraft bei den einzelnen Krafterzeugern 16, 17 wirksamen Bremsdruck. In der Figur 1 kann der Krafterzeuger 16 mit dem Bremsklotz 14 als erste Reibbremseinrichtung angesehen werden. Der Krafterzeuger 17 und der zweite Bremsklotz 15 können als zweite Reibbremseinrichtung angesehen werden. Es versteht sich, dass beide Reibbremseinrichtungen zugehörige Bremsgestänge und Aufhängungen aufweisen können, die nicht gezeigt sind. Die Hauptsteuerventileinrichtung 20 zusammen mit den Reibbremseinrichtungen kann als pneumatische Bremsvorrichtung angesehen werden. Statt als Klotzbremsen können die Reibbremseinrichtungen auch als Scheibenbremsen ausgebildet sein. Auch in diesem Fall kann jeweils ein Bremswirkungssensor vorgesehen sein, welcher eine bei der Bremsung ausgeübte Bremskraft und/oder ein Bremsmoment zu erfassen und entsprechende Bremsdaten an die elektronische Bremssteuereinrichtung 24 zu übertragen vermag. Die Bremssteuereinrichtung 24 ist dazu ausgebildet, von den Bremswirkungssensoren 18, 19 Bremswirkungsdaten und von den Bremsdrucksensoren 21, 31, 33 Bremsdruckdaten zu empfangen. Ferner ordnet die Bremssteuereinrichtung 24 die Bremsdruckdaten entsprechenden Bremswirkungsdaten zu und überwacht die einander zugeordneten Daten.

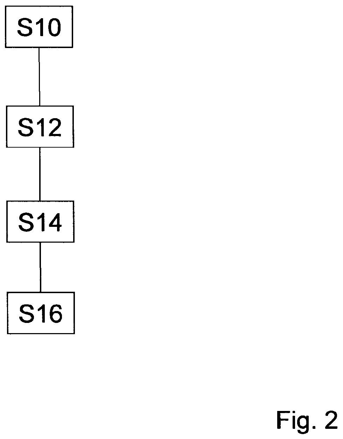

In Figur 2 ist ein Flussdiagramm eines Verfahrens zum Betreiben einer Bremsanlage eines Schienenfahrzeugs dargestellt. Die Bremsanlage kann beispielsweise eine in Figur 1 gezeigte Bremsanlage sein. In einem Schritt S10 steuert eine Bremssteuereinrichtung der Bremsanlage die Bremsanlage für eine Bremsung an. Dabei kann eine kraftschlussabhängige Reibungsbremsvorrichtung der Bremsanlage für die Bremsung angesteuert werden. Es ist allerdings auch vorstellbar, dass weitere Komponenten der Bremsanlage für die Bremsung angesteuert werden, etwa eine Magnetschienenbremse oder eine Wirbelstrombremse. In einem folgenden Schritt S12 empfängt die Bremssteuereinrichtung Bremsbetätigungsdaten, etwa Bremsdruckdaten. Die Bremsbetätigungsdaten werden von einer geeigneten Bremsbetätigungssensoreinrichtung der Bremsanlage übermittelt und repräsentieren mindestens einen einer kraftschlussabhängigen Reibungsbremsvorrichtung der Bremsanlage zugeordneten Bremsdruck oder Bremsstrom. In dem Fall, dass für die Bremsung die kraftschlussabhängige Reibungsbremsvorrichtung nicht angesteuert wird, ist davon auszugehen, dass die Bremsbetätigungsdaten einen Bremsdruck oder Bremsstrom von Null repräsentieren. Liegt jedoch ein anderer Wert des Bremsdrucks oder Bremsstroms vor, kann auf eine Fehlfunktion entweder der Bremsbetätigungssensoreinrichtung oder der kraftschlussabhängigen Reibungsbremsvorrichtung geschlossen werden. Ebenfalls im Schritt S12 empfängt die Bremssteuereinrichtung Bremswirkungsdaten, insbesondere Bremskraftdaten, die von einer entsprechenden Bremswirkungssensoreinrichtung der Bremsanlage übermittelt werden. Die Bremswirkungssensoreinrichtung kann insbesondere Reibbremseinrichtungen der kraftschlussabhängigen Reibungsbremsvorrichtung zugeordnet sein. In einem Schritt S14, der während des Empfangens der Bremswirkungsdaten und der Bremsbetätigungsdaten, gegebenenfalls leicht zeitverzögert, oder im Wesentlichen parallel dazu durchgeführt werden kann, ordnet die Bremssteuereinrichtung die Bremsbetätigungsdaten entsprechenden Bremswirkungsdaten zu. Die Zuordnung kann dabei insbesondere derart erfolgen, dass Bremsbetätigungsdaten, welche eine bestimmte Reibbremseinrichtung betreffen, Bremswirkungsdaten zugeordnet werden, welche die gleiche Reibbremseinrichtung betreffen. In einem darauf folgenden Schritt S16 überwacht die Bremssteuereinrichtung einander zugeordnete Bremswirkungsdaten und Bremsbetätigungsdaten. Insbesondere kann die Bremssteuereinrichtung überprüfen, ob sich aus den jeweils zugeordneten Bremswirkungsdaten und Bremsbetätigungsdaten eine Fehlfunktion der zugeordneten Reibbremseinrichtung oder der kraftschlussabhängigen Reibungsbremsvorrichtung ergibt. Beispielsweise kann die Bremssteuereinrichtung überwachen, ob sich bei einem bestimmten Bremsdruck oder Bremsstrom eine vorgegebene Mindestbremskraft ergibt und/oder bei einer bestimmten Bremskraft ein vorgegebener Mindestbremsdruck oder Mindestbremsstrom vorliegt. Abweichungen von Mindestbremskraft oder Mindestbremsdruck oder Mindestbremsstrom können auf eine Fehlfunktion der Reibbremseinrichtung und/oder der kraftschlussabhängigen Reibungsbremsvorrichtung hinweisen.

### Bezugszeichenliste

- 10: Bremsanlage
- 12: erstes Rad
- 13: zweites Rad
- 14: erster Bremsklotz
- 15: zweiter Bremsklotz
- 16: erster Krafterzeuger
- 17: zweiter Krafterzeuger
- 18: erster Bremskraftsensor
- 19: zweiter Bremskraftsensor
- 20: Hauptsteuerventileinrichtung
- 21: Hauptbremsdrucksensor
- 22: Druckluftvorratseinrichtung
- 24: Bremssteuereinrichtung
- 30: erster Raddrehzahlsensor
- 31: erster Bremsdrucksensor
- 32: zweiter Raddrehzahlsensor
- 33: zweiter Bremsdrucksensor

## Patentansprüche

1. Bremssteuereinrichtung (24) für eine Bremsanlage (10) für ein Schienenfahrzeug, wobei die Bremsanlage (10) mindestens eine kraftschlussabhängige Reibungsbremsvorrichtung umfasst, und
wobei die Bremssteuereinrichtung (24) dazu ausgebildet ist, der mindestens einen kraftschlussabhängigen Reibungsbremsvorrichtung zugeordnete Bremsbetätigungsdaten von einer Bremsbetätigungssensoreinrichtung (21, 31, 33) der Bremsanlage (10) zu empfangen;
wobei die Bremssteuereinrichtung (24) ferner dazu ausgebildet ist, der mindestens einen kraftschlussabhängigen Reibungsbremsvorrichtung zugeordnete Bremswirkungsdaten, nämlich Bremskraftdaten, von einer Bremswirkungssensoreinrichtung (18, 19) der Bremsanlage (10) zu empfangen;
wobei die Bremssteuereinrichtung (24) ferner dazu ausgebildet ist, die kraftschlussabhängige Reibungsbremsvorrichtung zu einer Bremsung anzusteuern und bei einer Bremsung Bremsbetätigungsdaten und Bremswirkungsdaten einander zuzuordnen und zu überwachen;
wobei die Bremsung eine Prüfbremsung ist; und
wobei die Bremssteuereinrichtung (24) dazu ausgebildet ist, eine Prüfbremsung während einer Fahrt anzusteuern;
**dadurch gekennzeichnet, dass**
die kraftschlussabhängige Reibungsbremsvorrichtung mehrere separat voneinander durch die Bremssteuereinrichtung (24) ansteuerbare Reibbremseinrichtungen (14, 16; 15, 17) aufweist, und
die Bremssteuereinrichtung (24) dazu ausgebildet ist, für eine Prüfbremsung die mehreren Reibbremseinrichtungen (14, 16; 15, 17) zeitlich verzögert anzusteuern.

2. Bremssteuereinrichtung nach Anspruch 1, wobei die Bremssteuereinrichtung (24) dazu ausgebildet ist, eine Prüfbremsung während der Fahrt in vorgegebenen Abständen anzusteuern.

3. Bremssteuereinrichtung nach einem der vorhergehenden Ansprüche, wobei die Bremssteuereinrichtung (24) dazu ausgebildet ist, Bremswirkungsdaten und zugeordnete Bremsbetätigungsdaten abzuspeichern.

4. Bremsanlage (10) für ein Schienenfahrzeug mit einer Bremssteuereinrichtung (24) nach einem der Ansprüche 1 bis 3.

5. Schienenfahrzeug mit einer Bremssteuereinrichtung (24) nach einem der Ansprüche 1 bis 3 und/oder einer Bremsanlage (10) nach Anspruch 4.

6. Verfahren zum Betreiben einer Bremsanlage (10) eines Schienenfahrzeugs, mit den Schritten:
Ansteuern, durch eine Bremssteuereinrichtung (24), einer kraftschlussabhängigen Reibungsbremsvorrichtung der Bremsanlage (10) für eine Bremsung;
Empfangen, durch eine Bremssteuereinrichtung (24), von durch eine Bremsbetätigungssensoreinrichtung (21, 31, 33) der Bremsanlage (10) übermittelten Bremsbetätigungsdaten;
Empfangen, durch die Bremssteuereinrichtung (24), von durch eine Bremswirkungssensoreinrichtung (18, 19) der Bremsanlage (10) übermittelten Bremswirkungsdaten, nämlich Bremskraftdaten;
Zuordnen, durch die Bremssteuereinrichtung (24), von Bremsbetätigungsdaten zu entsprechenden Bremswirkungsdaten;
Überwachen, durch die Bremssteuereinrichtung (24), von einander zugeordneten Bremswirkungsdaten und Bremsbetätigungsdaten;
wobei die Bremsung eine Prüfbremsung ist; und
Ansteuern, durch die Bremssteuereinrichtung (24), einer Prüfbremsung während einer Fahrt;
**gekennzeichnet durch**
zeitlich verzögertes Ansteuern, durch die Bremssteuereinrichtung (24), mehrerer separat voneinander ansteuerbarer Reibbremseinrichtungen (14, 16, 15, 17) der kraftschlussabhängigen Reibungsbremsvorrichtung für eine Prüfbremsung.

## Claims

1. A brake control device (24) for a brake system (10) for a rail vehicle, the brake system (10) comprising at least one adhesion-based friction brake apparatus, and
the brake control device (24) being designed to receive brake actuation data associated with the at least one adhesion-based friction brake apparatus from a brake actuation sensor device (21, 31, 33) of the brake system (10);
the brake control device (24) further being designed to receive brake action data associated with the at least one adhesion-based friction brake apparatus, namely braking force data, from a brake action sensor device (18, 19) of the brake system (10); and
the brake control device (24) further being designed to actuate the adhesion-based friction brake apparatus for a braking operation and to associate brake actuation data and brake action data with one another and to monitor said data during a braking operation;
the braking operation being a test braking operation and
the brake control device (24) being designed to actuate a test braking operation during a journey;
**characterised in that**
the adhesion-based friction brake apparatus has a plurality of friction brake devices (14, 16; 15, 17), which can be actuated separately by the brake control device (24), and
the brake control device (24) is designed to actuate the plurality of friction brake devices (14, 16; 15, 17) with a time delay for a test braking operation.

2. A brake control device according to claim 1, the brake control device (24) being designed to actuate a test braking operation at predetermined intervals during a journey.

3. A brake control device according to any of the preceding claims, the brake control device (24) being designed to store brake action data and associated brake actuation data.

4. A brake system (10) for a rail vehicle having a brake control device (24) according to any of claims 1 to 3.

5. A rail vehicle having a brake control device (24) according to any of claims 1 to 3 and/or a brake system (10) according to claim 4.

6. A process for operating a brake system (10) of a rail vehicle comprising the following steps:
the actuation by a brake control device (24) of an adhesion-based friction brake apparatus of the brake system (10) for a braking operation;
the reception by a brake control device (24) of brake actuation data transmitted by a brake actuation sensor device (21, 31, 33) of the brake system (10),
the reception by the brake control device (24) of brake action data, namely braking force data, transmitted by a brake action sensor device (18, 19) of the brake system (10);
the association by the brake control device (24) of brake actuation data with corresponding brake action data;
the monitoring by the brake control device (24) of brake action data and brake actuation data associated with one another;
the braking operation being a test braking operation; and
the actuation by the brake control device (24) of a test braking operation during a journey;
**characterised by**
the time-delayed actuation by the brake control device (24) of a plurality of friction brake devices (14, 16; 15, 17), which can be actuated separately, of the adhesion-based friction brake apparatus for a test braking operation.

## Revendications

1. Dispositif (24) de commande de frein pour un système (10) de frein d'un véhicule ferroviaire, le système (10) de frein comprenant au moins un dispositif de frein à friction dépendant d'une coopération de force et
dans lequel le dispositif (24) de commande de frein est constitué pour recevoir, d'un dispositif (21, 31, 33) de capteur d'actionnement de frein du système (10) de frein, des données d'actionnement de frein associées au au moins un dispositif de frein à friction dépendant d'une coopération de force ;
dans lequel le dispositif (24) de commande de frein est constitué, en outre, pour recevoir, d'un dispositif (18, 19) de capteur d'effet de frein du système (10) de frein, des données d'effet de frein, à savoir des données de force de frein, associées au au moins un dispositif de frein à friction dépendant d'une coopération de force ;
dans lequel le dispositif (24) de commande de frein est constitué, en outre, pour commander, en vue d'un freinage, le dispositif de frein à friction dépendant d'une coopération de force, et pour associer et contrôler, lors d'un freinage, des données d'actionnement de frein et des données d'effet de frein entre elles ;
dans lequel le freinage est un freinage de contrôle et dans lequel le dispositif (24) de commande de frein est constitué pour commander un freinage de contrôle pendant une marche ;
**caractérisé en ce que**
le dispositif de frein à friction dépendant d'une coopération de force a plusieurs dispositifs (14, 16 ; 15, 17) de frein à friction pouvant être commandés indépendamment les uns des autres par le dispositif (24) de commande de frein et
le dispositif (24) de commande de frein est constitué pour un freinage de contrôle, pour commander, de manière retardée dans le temps, les plusieurs dispositifs (14, 16 ; 15, 17) de frein à friction.

2. Dispositif (24) de commande de frein suivant la revendication 1, dans lequel le dispositif (24) de commande de frein est constitué pour commander un freinage de contrôle pendant la marche à des intervalles donnés à l'avance.

3. Dispositif (24) de commande de frein suivant l'une des revendications précédentes, dans lequel le dispositif (24) de commande de frein est constitué pour mettre en mémoire des données d'effet de frein et des données d'actionnement de frein associées.

4. Système (10) de freinage d'un véhicule ferroviaire, comprenant un dispositif (24) de commande de frein suivant l'une des revendications 1 à 3.

5. Véhicule ferroviaire, ayant un dispositif (24) de commande de frein suivant l'une des revendications 1 à 3 et/ou un système (10) de frein suivant la revendication 4.

6. Procédé pour faire fonctionner un système (10) de frein d'un véhicule ferroviaire, comprenant les stades :
commande, par un dispositif (24) de commande de frein, d'un dispositif de frein à friction dépendant d'une coopération de force du système (10) de frein pour un freinage ;
réception, par un dispositif (24) de commande de frein, de données d'actionnement de frein transmises par un dispositif (21, 31, 33) de capteur d'actionnement de frein du système (10) de frein ;
réception, par le dispositif (24) de données d'effet de frein, à savoir de données de force de frein, transmises par un dispositif (18, 19) de capteur d'effet de frein du système (10) de frein ;
association, par le dispositif (24) de commande de frein, de données d'actionnement de frein à des données d'effet de frein correspondantes ;
contrôle, par le dispositif (24) de commande de frein, de données d'effet de frein et de données d'actionnement de frein associées ;
dans lequel le freinage est un freinage de contrôle et
commande par le dispositif (24) de commande de frein d'un freinage de contrôle pendant une marche ;
**caractérisé par**
commande retardée dans le temps par le dispositif (24) de commande de frein de plusieurs dispositifs (14, 16 ; 15, 17) de frein à friction pouvant être commandés indépendamment les uns des autres du dispositif de frein à friction dépendant d'une coopération de force pour un freinage de contrôle.
